# EUROPÄISCHE PATENTSCHRIFT

(11) **EP 3 975 712 B1**
(45) Veröffentlichungstag und Bekanntmachung des Hinweises auf die Patenterteilung: **24.09.2025**
(21) Anmeldenummer: 20727240.2
(22) Anmeldetag: 19.05.2020
(51) Int. Cl.: A01M 7/00

(54) **STEUER- UND/ODER REGELSYSTEM FUER EIN LANDWIRTSCHAFTLICHES GERAET**
OPEN-LOOP AND/OR CLOSED-LOOP CONTROL SYSTEM FOR AN AGRICULTURAL IMPLEMENT
SYSTÈME DE COMMANDE ET/OU DE RÉGULATION DESTINÉ À UN APPAREIL AGRICOLE

(30) Priorität: 27.05.2019 DE 102019114086
(43) Veröffentlichungstag der Anmeldung: 06.04.2022
(73) Patentinhaber: Amazonen-Werke H. Dreyer SE & Co. KG, 49205 Hasbergen (DE)
(72) Erfinder: GROSSE PRUES, Frank, 49593 Bersenbrück (DE)
(86) Internationale Anmeldenummer: PCT/EP2020/063893
(87) Internationale Veröffentlichungsnummer: WO 2020/239520

(56) Entgegenhaltungen:
- EP-A1- 2 907 385
- EP-A1- 3 064 061
- WO-A1-2015/055680
- WO-A1-2015/067804
- DE-A1- 102017 104 814

## Beschreibung

Die Erfindung betrifft ein Steuer- und/oder Regelsystem für ein landwirtschaftliches Gerät. Ferner betrifft die Erfindung ein landwirtschaftliches Gerät sowie ein Verfahren zur Steuerung und/oder Regelung eines landwirtschaftlichen Geräts.

Derartige Geräte werden für landwirtschaftliche Vorrichtungen zum Ausbringen von Material, wie Düngemittel, Pflanzenschutzmittel oder Saatgut verwendet, beispielsweise für Feldspritzen. Um das Material großflächig und effizient auf dem zu bearbeitenden Feldboden auszubringen, weisen die landwirtschaftlichen Geräte ein Verteilergestänge mit mehreren Ausbringungselementen, etwa Sprühdüsen auf. Das Verteilergestänge erstreckt sich quer zur Fahrtrichtung und kann Arbeitsbreiten von bis zu 40m aufweisen. Dabei soll der Abstand zwischen dem Verteilergestänge und dem Boden über die gesamte Arbeitsbreite des Verteilergestänges möglichst konstant bleiben. Das bedeutet, dass das Verteilergestänge möglichst parallel zum zu bearbeitenden Boden gehalten wird.

Bekanntermaßen weist das Verteilergestänge ein Mittelteil, beispielhaft einen mittig gelegenen Rahmen, und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Dabei können die einzelnen Gestängeabschnitte über die zugehörigen Gelenke um vertikale Achsen verschwenkt werden und sind drehbar um die jeweilige vertikale Achse gelagert. Mittels der ausklappbaren Gestängeabschnitte kann das Verteilergestänge somit von einer platzsparenden Transportstellung in eine Arbeitsstellung überführt werden. Die Transportstellung beschreibt hierbei den eingeklappten Zustand des Verteilergestänges, bei dem die seitlichen Ausleger vollständig zum Mittelteil hin eingeklappt sind. Im Gegensatz dazu beschreibt die Arbeitsstellung jenen Zustand des Verteilergestänges, bei dem alle Gestängeabschnitte ausgeklappt sind. Mit anderen Worten weist das Verteilergestänge in der Arbeitsstellung die gesamte Arbeitsbreite auf.

Im Betrieb eines landwirtschaftlichen Gerätes mit einer derartig großen Arbeitsbreite kann es beispielsweise aufgrund des Überfahrens von Unebenheiten im Boden, Beschleunigungen oder dem Abbremsen des Geräts oder eines, das Gerät ziehenden oder tragenden, Nutzfahrzeuges zu Schwingungen des Verteilergestänges in oder entgegengesetzt zur Fahrtrichtung kommen. Aufgrund derartiger Schwingungen können sehr hohe Kräfte am Verteilergestänge auftreten und eine homogene Materialausbringung kann nicht mehr garantiert werden. Es ist daher beispielhaft aus der EP 2 829 177 B1 bekannt, Stell- und/oder Dämpfungsmittel zwischen dem Mittelteil und den Auslegern, bzw. zwischen den Gestängeabschnitten derart anzuordnen, dass das Verteilergestänge einerseits von einer Transportstellung in eine Arbeitsstellung und umgekehrt überführbar ist und andererseits eine Dämpfung von am Verteilergestänge in Fahrtrichtung auftretenden Schwingungen erfolgen kann. Die Stell- und/oder Dämpfungsmittel können beispielsweise als hydraulisch arbeitende Zylinder ausgebildet sein. Infolge von Schwingungen des Verteilergestänges entstehen hierbei Druckunterschiede in den hydraulischen Zylindern.

Es hat sich nun gezeigt, dass bekannte Dämpfungssysteme bei Fahrzuständen, bei denen es zwangsläufig notwendig ist, Kräfte von dem Gerät in das Verteilergestänge zu übertragen, wie bei starkem Beschleunigen oder Bremsen des Geräts, oder bei Kurvenfahrt, unzuverlässig arbeiten. Weitere relevante Stand der Technik Dokumente sind DE102017104814A1, EP2907385A1, WO2015/055680A1, WO2015/067804A1, EP3064061A1.

Der Erfindung liegt daher die Aufgabe zugrunde, ein verbessertes Steuer- und/oder Regelsystem für ein landwirtschaftliches Gerät anzugeben, bei dem eine präzise Dämpfung von auftretenden Schwingungen in oder entgegengesetzt zur Fahrtrichtung erfolgen kann.

Diese Aufgabe wird gelöst durch ein Steuer- und/oder Regelsystem gemäß Anspruch 1. Bevorzugte Ausführungsformen sind in den abhängigen Ansprüchen beschrieben.

Die erfindungsgemäße hydraulische Einrichtung kann eine hydraulische Einrichtung sein, durch welche das Verteilergestänge von einer Transport- in eine Arbeitsstellung und umgekehrt überführbar ist. Es kann sich aber auch um eine hydraulische Einrichtung handeln, die unabhängig von einer Einrichtung zum Überführen des Verteilgestänges von einer Transport- in eine Arbeitsstellung und umgekehrt ist.

Erfindungsgemäß werden zum Erstellen des Stellsignals für die hydraulische Einrichtung sowohl Druckwerte berücksichtigt, die an einer jeweiligen hydraulischen Einrichtung anliegen, als auch eine ermittelte Position des jeweiligen Auslegers zu dem Mittelteil. Dabei wird weiterhin bei der Verarbeitung der Druckwerte die ermittelte Position berücksichtigt. Mit anderen Worten fließt die aktuelle Stellung des Auslegers in die Generierung des Stellsignals mit ein, und die Stellung hat zudem Einfluss auf die Verarbeitung der Druckwerte. So kann beispielsweise bestimmt werden, ob sich der Ausleger in einer Stellung befindet, in der eine Schwingungsdämpfung erwünscht ist, also in einer normalen Arbeitsstellung, oder ob eine Schwingungsdämpfung nicht erwünscht ist, also der Ausleger sich nicht in seiner normalen Arbeitsstellung befindet. Insbesondere können auf diese Weise externe Kräfte berücksichtigt werden, die durch einen Fahrzustand, wie beispielsweise das Fahren einer Kurve, plötzliches Bremsen oder Beschleunigen, oder ähnliches, auftreten, da diese Kräfte sich direkt in einer Änderung der ermittelten Position niederschlagen. So kann verhindert werden, dass bei einem Fahrzustand, bei dem externe Kräfte auf das Gerät einwirken, ein Konflikt zwischen der Dämpfungssteuerung aufgrund der Druckmessungen und der Steuerung aufgrund der ermittelten Position auftritt.

Die erste Sensoreinrichtung kann einen oder mehrere Sensoren umfassen. Die Sensoren der ersten Sensoreinrichtung können als Drucksensor zur direkten Druckmessung, insbesondere als Druckmessumformer, ausgebildet sein. Eine solche Ausbildung als Drucksensor hat den Vorteil, dass hierdurch sowohl ein Relativdruck, als auch ein Absolutdruck ermittelt werden können. Weiterhin können die Sensoren vorzugsweise als Differenzdruckmessumformer zur Ermittlung eines Differenzdrucks, beziehungsweise eines auftretenden Druckunterschieds, ausgebildet sein. Vorteilhafterweise können die Druckmessumformer den zu messenden Druck über eine Messmembran erfassen, welche in Abhängigkeit vom jeweiligen Druck mechanisch umgeformt wird. Diese mechanische Veränderung wird elektronisch gemessen und als analoges Ausgangssignal ausgegeben und an die Datenverarbeitungseinheit übermittelt. Die Sensoreinrichtung kann hierbei auch eine Kombination aus Sensoren verschiedenen Typs umfassen.

Die zweite Sensoreinrichtung kann einen oder mehrere Sensoren umfassen. Die Sensoren der zweiten Sensoreinrichtung können als Potentiometer ausgebildet sein. Das Potentiometer ermittelt hierbei, ob ein einzelner Gestängeabschnitt oder auch der gesamte Ausleger aus seiner Solllage, insbesondere seiner Arbeitsstellung, in Fahrtrichtung ausgelenkt wird, und wie sich dessen Position, bzw. Lage verändert. Zusätzlich oder alternativ kann die zweite Sensoreinrichtung Sensoren umfassen, die dazu ausgebildet sind, einen Positionsparameter der jeweiligen hydraulischen Einrichtung zu ermitteln. Beispielsweise kann ein solcher Positionsparameter der Stellweg, also die Position des Kolbens, des doppeltwirkenden Hydraulikzylinders sein. Durch die Bestimmung dieses Parameters kann ermittelt werden, wie weit der Hydraulikzylinder ein- bzw. ausgefahren ist. Dies korreliert direkt mit der Position des jeweiligen Auslegers zu dem Mittelteil.

Die Datenverarbeitungseinheit kann dazu konfiguriert sein, die Signale der ersten Sensoreinrichtung mittels eines ersten Reglers, insbesondere eines ersten PID-Reglers (proportional-integral-derivative - Reglers), zu verarbeiten, und das Stellsignal basierend auf der Ausgabe des ersten Reglers zu generieren. Mit anderen Worten kann die Datenverarbeitungseinheit dazu konfiguriert sein, die jeweilige hydraulische Einrichtung so zu steuern, dass ein Solldruck an der jeweiligen hydraulischen Einrichtung herrscht. Alternativ oder zusätzlich kann die Datenverarbeitungseinheit dazu konfiguriert sein, die Signale der zweiten Sensoreinrichtung mittels eines zweiten Reglers, insbesondere eines zweiten PID-Reglers, zu verarbeiten, und das Stellsignal basierend auf der Ausgabe des zweiten Reglers zu generieren. Die Datenverarbeitungseinheit kann also dazu konfiguriert sein, die jeweilige hydraulische Einrichtung so zu steuern, dass eine Soll-Position eines jeweiligen Auslegers zu dem Mittelteil eingehalten wird.

Die Datenverarbeitungseinheit kann dazu konfiguriert sein, den Einfluss der Signale der ersten Sensoreinrichtung auf das Generieren des Stellsignals zu verringern, wenn eine Abweichung der ermittelten Position von einer Soll-Position größer oder gleich einem ersten vorherbestimmten Wert ist.

Dabei kann die Soll-Position beispielsweise durch einen Soll-Winkel gekennzeichnet sein, wobei die Abweichung von der Soll-Position durch eine Winkeldifferenz zwischen dem Soll-Winkel und einem ermittelten Winkel bestimmt wird. Hierin wird unter einer Winkeldifferenz der Betragswert der Differenz zwischen zwei Winkeln verstanden. Dabei kann eine Winkeldifferenz direkt über geeignete Sensoren gemessen werden. Sie kann aber auch, beispielsweise durch die Datenverarbeitungseinheit, mittels Differenzbildung zweier gemessener Winkelwerte bestimmt werden.

Alternativ oder zusätzlich kann die Soll-Position durch einen Soll-Positionsparameter der hydraulischen Einrichtung gekennzeichnet sein. In diesem Fall kann die Abweichung von der Soll-Position durch die Differenz zwischen dem Soll-Positionsparameter und einem gemessenen Positionsparameter bestimmt werden.

Insbesondere kann die Datenverarbeitungseinheit dazu konfiguriert sein, hierbei weiterhin den Ausgabewert des ersten Reglers zu berücksichtigen. Beispielsweise kann die Datenverarbeitungseinheit dazu konfiguriert sein, den Einfluss der Signale der ersten Sensoreinrichtung auf das Stellsignal nur dann zu verringern, wenn die Abweichung größer oder gleich dem ersten vorherbestimmten Wert ist und wenn der Ausgabewert des ersten Reglers zu einer Vergrößerung der Abweichung führen würde. Dagegen kann die Datenverarbeitungseinheit dazu konfiguriert sein, den Einfluss der Signale der ersten Sensoreinrichtung auf das Stellsignal nicht zu verringern, wenn die Abweichung größer oder gleich dem ersten vorherbestimmten Wert ist, aber der Ausgabewert des ersten Reglers zu einer Verkleinerung der Abweichung führen würde.

Beispielsweise kann die Soll-Position ein Soll-Winkel und die Abweichung eine Winkeldifferenz sein. Der erste vorherbestimmte Wert kann beispielsweise im Bereich von 0,1° bis 0,9°, vorzugsweise im Bereich von 0,2° bis 0,6°, liegen. Indem der Einfluss der Signale der ersten Sensoreinrichtung, also der Druckwerte, auf das Stellsignal in diesen Fällen verringert wird, kann der Einfluss der Schwingungsdämpfung solange zumindest teilweise abgeschwächt werden, bis der Soll-Winkel wieder erreicht ist. Mit anderen Worten kann die Schwingungsdämpfung unterdrückt werden, bis das landwirtschaftliche Gerät wieder die "normale" Arbeitsstellung eingenommen hat.

Beispielweise kann ein Soll-Winkel der gewünschten Winkel zwischen Ausleger und Mittelteil in der Arbeitsstellung, beispielsweise 90°, sein. In dem Fall, dass der tatsächlich gemessene Winkel in einem Winkelintervall von (Soll-Winkel - erster vorherbestimmter Wert) bis (Soll-Winkel + erster vorherbestimmter Wert) liegt, beispielsweise in einem Intervall von 89,1° bis 90,9 °, kann die Datenverarbeitungseinheit dazu konfiguriert sein, den Einfluss der Signale der ersten Sensoreinrichtung auf das Stellsignal nicht zu verringern. Mit anderen Worten wirkt die Schwingungsdämpfung in diesem Winkelintervall vollständig. Falls der gemessene Wert außerhalb dieses Intervalls liegt, so kann die Datenverarbeitungseinheit dazu konfiguriert sein, die Wirkung der Schwingungsdämpfung in Abhängigkeit vom Ausgabewert des ersten Reglers zu verringern.

Liegt der gemessene Winkel außerhalb des oben genannten Intervalls, so kann die Datenverarbeitungseinheit weiterhin prüfen, ob der vom ersten Regler ausgegebene Wert zu einer Vergrößerung des Winkels oder zu einer Verkleinerung des Winkels führt. Im Folgenden wird angenommen, dass ein negativer Ausgabewert in einem Stellsignal resultiert, welches zu einem Ausklappen des jeweiligen Auslegers und zu einer Vergrößerung des Winkels führt. Ein positiver Ausgabewert resultiert dann analog in einem Stellsignal, welches zu einem Einklappen des jeweiligen Auslegers und zu einer Verkleinerung des Winkels führt. Natürlich kann die Datenverarbeitungseinheit aber auch so konfiguriert sein, dass ein negativer Ausgabewert zu einem Einklappen und ein positiver Ausgabewert zu einem Ausklappen des jeweiligen Auslegers führt.

Beispielsweise kann der gemessene Winkel 91° betragen, also größer als der Soll-Winkel sein. Falls der erste Regler in diesem Fall einen negativen Wert ausgibt, also einen Wert, der zu einer Vergrößerung des Winkels führen würde, kann die Datenverarbeitungseinheit dazu konfiguriert sein, die Wirkung der Schwingungsdämpfung zu verringern. Gibt der erste Regler hingegen einen positiven Wert aus, so kann die Datenverarbeitungseinheit dazu konfiguriert sein, die Wirkung der Schwingungsdämpfung unverändert zu lassen.

Ist der gemessene Winkel kleiner als der Soll-Winkel, beispielsweise 89°, so gilt Analoges, allerdings mit umgekehrten Vorzeichen. Gibt also der erste Regler in diesem Fall einen positiven Wert aus, kann die Datenverarbeitungseinheit dazu konfiguriert sein, die Wirkung der Schwingungsdämpfung verringern. Gibt der erste Regler hingegen einen negativen Wert aus, so kann die Datenverarbeitungseinheit dazu konfiguriert sein, die Wirkung der Schwingungsdämpfung unverändert lassen.

Es sei an dieser Stelle darauf hingewiesen, dass das eben Gesagte analog für den Fall gilt, bei dem die Soll-Position und die Abweichung jeweils durch einen Soll-Positionsparameter der jeweiligen hydraulischen Einrichtung bzw. die Differenz zwischen dem Soll-Positionsparameter und dem ermittelten Wert des Positionsparameters gekennzeichnet sind. In diesem Fall werden bei der Steuerung anstelle der beschriebenen Winkelwerte und -intervalle entsprechende Werte und Intervalle des Positionsparameters verwendet. Insbesondere kann der Einfluss der Signale der ersten Sensoreinrichtung auf das Stellsignal direkt proportional zu der Abweichung verringert werden. Mit anderen Worten kann der Einfluss der Druckmessungen auf das Generieren des Stellsignals umso stärker verringert werden, je größer die festgestellte Abweichung ist.

Beispielsweise kann der Einfluss der Signale der ersten Sensoreinrichtung auf das Stellsignal verringert werden, indem der maximale Ausgangswert des ersten Reglers verringert wird. Alternativ oder zusätzlich dazu ist es auch möglich, einen Regelfaktor des ersten Reglers zu verringern.

Weiterhin kann die Datenverarbeitungseinheit dazu konfiguriert sein, die Werte der ersten Sensoreinrichtung bei dem Generieren des Stellsignals nicht zu berücksichtigen, wenn eine Abweichung der ermittelten Position von einer Soll-Position größer oder gleich einem zweiten vorherbestimmten Wert ist.

Wie weiter oben beschrieben kann auch in diesem Fall die Soll-Position beispielsweise durch einen Soll-Winkel und/oder durch einen Soll-Positionsparameter der hydraulischen Einrichtung gekennzeichnet sein.

Auch hier kann die Datenverarbeitungseinheit dazu konfiguriert sein, den Ausgabewert des ersten Reglers bei dem Generieren des Stellsignals zu berücksichtigen. Beispielsweise kann die Datenverarbeitungseinheit dazu konfiguriert sein, den Einfluss der Signale der ersten Sensoreinrichtung auf das Stellsignal nur dann zu verringern, wenn die Abweichung größer oder gleich dem zweiten vorherbestimmten Wert ist und wenn der Ausgabewert des ersten Reglers zu einer Vergrößerung der Abweichung führen würde. Dagegen kann die Datenverarbeitungseinheit dazu konfiguriert sein, den Einfluss der Signale der ersten Sensoreinrichtung auf das Stellsignal nicht zu verringern, wenn die Abweichung größer oder gleich dem zweiten vorherbestimmten Wert ist, aber der Ausgabewert des ersten Reglers zu einer Verkleinerung der Abweichung führen würde.

Beispielsweise kann die Soll-Position ein Soll-Winkel und die Abweichung eine Winkeldifferenz sein. Der zweite vorherbestimmte Wert kann beispielsweise im Bereich von 1° bis 5°, vorzugsweise im Bereich von 1,2° bis 1,8° liegen. Im Falle einer größeren Abweichung zwischen dem Soll-Winkel und dem ermittelten Winkel ist es vorteilhaft, die Dämpfungssteuerung vollständig zu unterdrücken, bis das Gerät wieder annähernd die "normale" Arbeitsstellung erreicht hat. Um dies zu erreichen kann beispielsweise der maximale Ausgangswert des ersten Reglers in diesen Fällen auf den Wert 0 reduziert werden. Alternativ oder zusätzlich kann ein Regelfaktor des ersten Reglers auf 0 reduziert werden. Es ist auch möglich, in solchen Fällen das Ausgangssignal des ersten Reglers, oder ein anderweitig auf Grund der Signale der ersten Sensoreinrichtung generiertes Signal, in diesen Fällen nicht an die hydraulische Einrichtung weiterzugeben.

In dem Fall, dass der tatsächlich gemessene Winkel außerhalb eines Winkelintervalls von (Soll-Winkel - zweiter vorherbestimmter Wert) bis (Soll-Winkel + zweiter vorherbestimmter Wert), beispielsweise außerhalb des Winkelintervalls von 88° bis 92°, so kann die Datenverarbeitungseinheit dazu konfiguriert sein, zu prüfen, ob der erste Regler einen positiven oder negativen Wert ausgibt. Das weiter oben zu den möglichen Vorzeichen des Ausgabewerts Gesagte gilt hier analog.

Beispielsweise kann der gemessene Winkel 93° betragen, also größer als der Soll-Winkel sein. Falls der erste Regler in diesem Fall einen negativen Wert ausgibt, kann die Datenverarbeitungseinheit dazu konfiguriert sein, die Wirkung der Schwingungsdämpfung zu unterdrücken. Gibt der erste Regler hingegen einen positiven Wert aus, so kann die Datenverarbeitungseinheit dazu konfiguriert sein, die Wirkung der Schwingungsdämpfung unverändert lassen.

Ist der gemessene Winkel kleiner als der Soll-Winkel, beispielsweise 88°, so gilt Analoges, allerdings mit umgekehrten Vorzeichen. Falls der erste Regler in diesem Fall einen positiven Wert ausgibt, kann die Datenverarbeitungseinheit dazu konfiguriert sein, die Wirkung der Schwingungsdämpfung zu unterdrücken. Gibt der erste Regler hingegen einen negativen Wert aus, so kann die Datenverarbeitungseinheit dazu konfiguriert sein, die Wirkung der Schwingungsdämpfung unverändert zu lassen. Das eben Gesagte gilt analog für den Fall, in dem die Soll-Position und die Abweichung jeweils durch einen Soll-Positionsparameter der jeweiligen hydraulischen Einrichtung bzw. die Differenz zwischen dem Soll-Positionsparameter und dem ermittelten Wert des Positionsparameters gekennzeichnet sind. In diesem Falle werden bei der Steuerung anstelle der beschriebenen Winkelwerte und -intervalle entsprechende Werte und Intervalle des Positionsparameters verwendet.

Die Datenverarbeitungseinheit kann weiterhin dazu konfiguriert sein, den Ausgangswert des ersten und/oder des zweiten Reglers auf einen Maximalwert zu begrenzen. Dies kann insbesondere unabhängig von den Signalen der ersten und/oder zweiten Sensoreinrichtung geschehen. Auf diese Weise kann verhindert werden, dass ein Stellsignal generiert wird, welches zu einer übermäßig heftigen Bewegung des jeweiligen Auslegers führen könnte.

Die erste Sensoreinrichtung kann dazu konfiguriert sein, einen Druck zu erfassen, der einem Druck auf der Seite einer Ringfläche eines jeweiligen Hydraulikzylinders zugeordnet ist.

Weiterhin kann die erste Sensoreinrichtung dazu konfiguriert sein, einen Druck zu erfassen, der einem gemeinsamen Druck auf den Seiten der Ringflächen aller Hydraulikzylinder zugeordnet ist. Beispielsweise kann die erste Sensoreinrichtung dazu konfiguriert sein, den Druck in einer Hydraulikleitung des Systems zu erfassen, welche die ringseitigen Kammern aller Hydraulikzylinder des Systems mit der Hydraulikflüssigkeit versorgt. Durch eine solche Anordnung wird das System vereinfacht, da die Gesamtanzahl der nötigen Sensoren verringert wird.

Die jeweilige hydraulische Einrichtung kann weiterhin eine Hydraulikleitung umfassen, welche zur Zufuhr von Hydraulikflüssigkeit an den Hydraulikzylinder angeschlossen ist, sowie wenigstens eine hydraulische Ventileinheit zur Regelung des Hydraulikdrucks, wobei die Ventileinheit über ein Stellsignal der Datenverarbeitungseinheit steuerbar ist.

Die hydraulische Einrichtung kann generell als Aktor ausgebildet sein, um die elektrischen Stellsignale der Datenverarbeitungseinheit in eine mechanische Bewegung umzuwandeln und damit das Verteilergestänge sowohl von einer Transportstellung in eine Arbeitsstellung zu überführen, als auch die Dämpfung von am Verteilergestänge auftretenden Schwingungen in Fahrtrichtung zu gewährleisten. Die hydraulische Ventileinheit sorgt hierbei vorteilhafterweise für einen sicheren und schnell wirkenden Überlastungsschutz des Hydraulikzylinders. Insgesamt kann der Hydraulikdruck am Hydraulikzylinder mittels der hydraulischen Ventileinheit, welche von der Datenverarbeitungseinheit mittels eines Stellsignals angesteuert werden kann, optimal eingestellt werden.

Die an dem jeweiligen Hydraulikzylinder angeschlossene Hydraulikleitung kann mit zumindest einem Hydraulikspeicher in Verbindung stehen. Es ist denkbar, dass das Steuer- und/oder Regelsystem einen zentralen Hydraulikspeicher umfasst, oder alternativ jeweils ein Hydraulikspeicher dem rechtsseitigen oder linksseitigen Ausleger des Verteilergestänges zugeordnet ist. Durch den Hydraulikspeicher wird vorteilhafterweise der in dem Hydraulikzylinder wirkende Hydraulikdruck erzeugt.

Es ist möglich, dass die dem jeweiligen Ausleger zugeordneten hydraulischen Einrichtungen einen geschlossenen Hydraulikkreislauf bilden, wobei die Hydraulikzylinder der hydraulischen Einrichtungen mittels einer gemeinsamen Hydraulikleitung verbunden sind. Idealerweise kann somit auf die Anbringung von einzelnen separaten Hydraulikleitungen verzichtet werden. Weiterhin kann in diesem Fall ein gemeinsamer Sensor zur Ermittlung einer auftretenden Druckänderung an den hydraulischen Einrichtungen auch an der gemeinsamen Hydraulikleitung angebracht werden.

Die wenigstens eine hydraulische Ventileinheit kann durch ein Proportionalventil gebildet werden. Insbesondere kann es sich um ein 4-Wege-Ventil handeln. Es kann sich auch um ein 2-Wege-Ventil handeln. Die hydraulische Ventileinheit kann beispielhaft auch durch ein Druckregelventil oder weitere Verschaltungen zur Veränderung des anliegenden Hydraulikdrucks in der hydraulischen Einrichtung gebildet werden.

Weiter kann die hydraulische Ventileinheit anhand einer bekannten Kennlinie elektronisch gesteuert einstellbar sein. Die Kennlinie der Ventileinheit spiegelt hierbei generell die funktionale Abhängigkeit des Ausgangssignals vom Eingangssignal wider. Idealerweise ändert sich das Ausgangssignal linear mit dem auftretenden Druck als Eingangssignal. Die ideale Kennlinie wäre demnach eine Gerade. Die gemessene, oder anders gesagt die reale Kennlinie der hydraulischen Ventileinheit kann aber nicht exakt linear sein, sondern selbst am Anfangs- und Endpunkt des Druckbereichs können die Ausgangssignale von den jeweiligen idealen Werten abweichen. Es ist daher für eine präzise Anpassung der Dämpfung von auftretenden Schwingungen am Verteilergestänge vorteilhaft, die hydraulische Ventileinheit anhand deren Kennlinie einzustellen und daher an die auftretende Druckänderung anzupassen und ihr entgegenzuwirken. Dabei kann beispielhaft über die Drucksensoren anhand der Kennlinie der Ventileinheit ermittelt werden, wie groß der benötigte Steuerstrom auf die Ventileinheit geschaltet werden muss, um der auftretenden Druckänderung entgegenzuwirken.

Die Datenverarbeitungseinheit kann mit der Sensoreinrichtung und den jeweiligen hydraulischen Einrichtungen eine Einheit bilden. Dies impliziert eine direkte Verbindung, beispielsweise über Kabelleitungen oder kabellos, zwischen der Sensoreinheit und der Datenverarbeitungseinheit, sowie der hydraulischen Einrichtung. Daher kann das von der Sensoreinrichtung erfasste Messsignal effizient und schnellstmöglich an die hydraulische Einrichtung zur Schwingungsdämpfung über ein Stellsignal der Datenverarbeitungseinheit weitergegeben werden.

Weiterhin kann die wenigstens eine hydraulische Ventileinheit der jeweiligen hydraulischen Einrichtung des einen Auslegers unabhängig von der hydraulischen Ventileinheit der jeweiligen hydraulischen Einrichtung des anderen Auslegers durch die Steuer- und/oder Regelsystem ein- und/oder verstellbar sein. Dies bedeutet, dass die hydraulische Ventileinheit der zugehörigen hydraulischen Einrichtung des jeweiligen Auslegers unabhängig über ein elektronisches Signal von der Datenverarbeitungseinheit angesteuert werden kann. Daher ist das Steuer- und/oder Regelsystem effizient sowohl für symmetrische, als auch für asymmetrische Verteilergestänge verwendbar.

Die Erfindung stellt weiterhin ein landwirtschaftliches Gerät zum Ausbringen von Material, wie Düngemittel, Pflanzenschutzmittel oder Saatgut, umfassend ein Steuer- und/oder Regelsystem zu Verfügung. Das Steuer- und/oder Regelsystem kann dabei eines oder mehrere der oben beschriebenen Merkmale aufweisen. Das landwirtschaftliche Gerät kann insbesondere eine Feldspritze sein. Die Feldspritze kann selbstfahrend sein. Sie kann auch eine gezogene oder getragene Feldspritze sein.

Die Erfindung stellt weiterhin ein Verfahren zur Steuerung und/oder Regelung eines landwirtschaftlichen Geräts zu Verfügung. Das landwirtschaftliche Gerät besitzt ein Verteilergestänge zum Ausbringen von Material, wie Düngemittel, Pflanzenschutzmittel oder Saatgut, welches sich quer zur Fahrtrichtung erstreckt, und weist ein Mittelteil und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Hierbei ist jedem Ausleger wenigstens eine hydraulische Einrichtung zugeordnet, wodurch das Verteilergestänge von einer Transportstellung in eine Arbeitsstellung und umgekehrt überführbar ist. Die jeweilige hydraulische Einrichtung ist weiterhin zur Dämpfung von am Verteilergestänge in Fahrtrichtung auftretenden Schwingungen ansteuerbar ist, und die jeweilige hydraulische Einrichtung umfasst einen Hydraulikzylinder, insbesondere einen doppeltwirkenden Hydraulikzylinder. Das Verfahren umfasst dabei die folgenden Schritte:
- Erfassen einer durch Schwingungen des Verteilergestänges auftretenden Druckänderung an der jeweiligen hydraulischen Einrichtung durch eine erste Sensoreinrichtung.
- Ermitteln einer Position eines der Ausleger zu dem Mittelteil durch eine zweite Sensoreinrichtung.
- Generieren, auf Basis der erfassten Druckänderung und der ermittelten Position, eines Stellsignals für die jeweilige hydraulische Einrichtung, wobei die Signale der ersten Sensoreinrichtung unter Berücksichtigung der ermittelten Position verarbeitet werden.

Das Verfahren kann weiterhin die folgenden Schritte umfassen:
- Verarbeiten der Signale der ersten Sensoreinrichtung und/oder der zweiten Sensoreinrichtung mittels eines Reglers, insbesondere eines PID-Reglers.
- Generieren des Stellsignals basierend auf der Ausgabe des Reglers.

Weiterhin kann in dem Verfahren der Einfluss der Signale der ersten Sensoreinrichtung auf das Generieren des Stellsignal verringert werden, wenn eine Abweichung der ermittelten Position von einer Soll-Position größer oder gleich einem ersten vorherbestimmten Wert ist.

Weiterhin können in dem Verfahren die Signale der ersten Sensoreinrichtung bei dem Generieren des Stellsignals nicht berücksichtig werden, wenn eine Abweichung der ermittelten Position von einer Soll-Position größer oder gleich einem zweiten vorherbestimmten Wert ist.

Das Steuer- und Regelsystem kann eines oder mehrere der oben beschriebenen Merkmale aufweisen.

Weitere Merkmale und Vorteile der Erfindung werden nachfolgend anhand der beispielhaften Figuren erläutert. Dabei zeigt:
- Fig. 1: schematisch ein Verteilergestänge mit einem Steuer- und/oder Regelsystem und mit einem Mittelteil und zwei mit dem Mittelteil verbundene seitliche Ausleger in Draufsicht;
- Fig. 2: schematisch eine Detailansicht eines Verteilergestänges mit einem Steuer- und/oder Regelsystem und mit einem Mittelteil und zwei mit dem Mittelteil verbundene seitliche Ausleger;
- Fig. 3: schematisch einen Regelschaltplan für ein Steuer- und/oder Regelsystem;
- Fig. 4: schematisch einen Regelschaltplan für ein Steuer- und/oder Regelsystem;
- Fig. 5a und 5b: schematisch den Verlauf eines maximalen Ausgangssignals eines Reglers und den Verlauf eines Regelfaktors;
- Fig. 6: schematisch Winkelbereiche für die Regelung;
- Fig. 7: schematisch einen Hydraulikschaltplan für ein Steuer- und/oder Regelsystem gemäß einem Ausführungsbeispiel;
- Fig. 8: schematisch einen Hydraulikschaltplan für ein Steuer- und/oder Regelsystem gemäß einem weiteren Ausführungsbeispiel; und
- Fig. 9: schematisch einen Hydraulikschaltplan für ein Steuer- und/oder Regelsystem gemäß einem weiteren Ausführungsbeispiel..

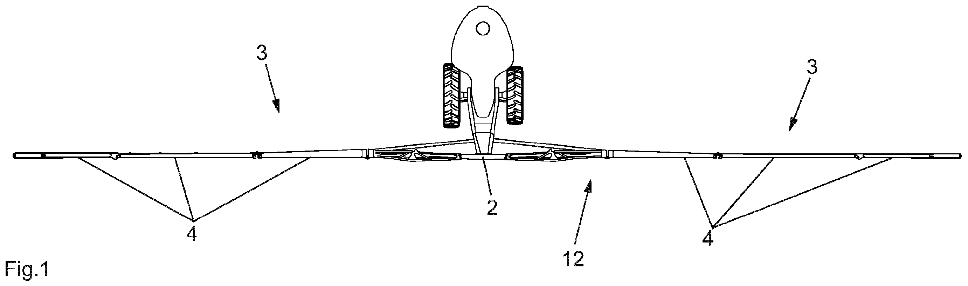

Fig. 1 zeigt schematisch ein Verteilergestänge 12 zur Verwendung mit einem erfindungsgemäßen Steuer- und/oder Regelsystem für ein landwirtschaftliches Gerät in Draufsicht. Das landwirtschaftliche Gerät ist hier als Feldspritze ausgebildet. Das Verteilergestänge 12 dient der Ausbringung von Material, wie Düngemittel, Pflanzenschutzmittel oder Saatgut und erstreckt sich quer zur Fahrtrichtung. Das Verteilergestänge 12 weist ein Mittelteil 2 und zwei mit dem Mittelteil 2 verbundene seitliche Ausleger 3 mit mehreren zueinander in Transportstellung einklappbaren und in Arbeitsstellung ausklappbaren, durch Gelenke verbundene Gestängeabschnitten 4 auf.

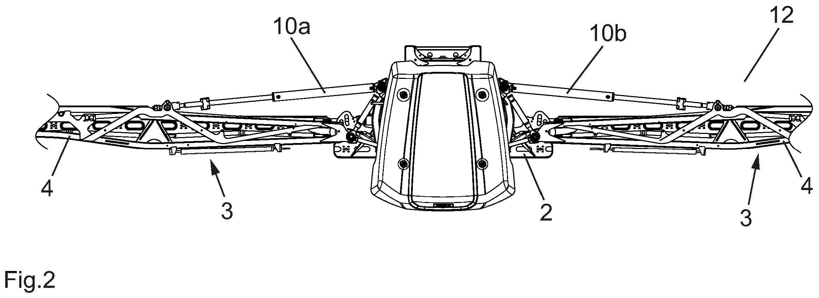

Fig. 2 zeigt schematisch Detailansicht des in Fig. 1 gezeigten Verteilergestänges 12. Es ist zu sehen, dass dem rechten und linken Ausleger 3 jeweils ein Hydraulikzylinder 10 a, b zugeordnet ist, welcher mit dem Mittelteil 2 und dem jeweiligen Ausleger 3 verbunden ist. Mittels des jeweiligen Hydraulikzylinders 10 a, b ist der jeweilige Ausleger 3 und damit das Verteilergestänge 12 von einer Transportstellung in eine Arbeitsstellung überführbar. Dabei klappen die Hydraulikzylinder 10 a, b das Verteilergestänge 12 über vertikale Achsen in Arbeits- und Transportstellung. Um den Ausleger komplett von der Transport- in die Arbeitsstellung zu überführen, können weitere Vorrichtungen vorhanden sein, die in Fig. 1 und Fig. 2 nicht gezeigt sind. Beispielsweise kann jedem Gestängeabschnitt 4 ein weiterer Hydraulikzylinder zugeordnet sein, der den jeweiligen Gestängeabschnitt 4 ein- und/oder ausklappen kann.

Im Folgenden wird der Begriff "vollständig ausgeklappt" in Bezug auf einen Ausleger 3 derart verwendet, dass in diesem Zustand der Winkel zwischen dem Ausleger 3 und dem Mittelteil 2 90° beträgt. Ist der Winkel kleiner als 90°, so ist der Ausleger 3 nicht vollständig ausgeklappt. Ist der Winkel größer als 90°, so ist der Ausleger 3 zu weit ausgeklappt.

Im Bereich der Hydraulikzylinder 10 a, b können nicht dargestellte Sensoren zur Erfassung der Arbeitsstellung des Verteilergestänges angebracht sein. Beispielhaft können die Sensoren als Potentiometer ausgebildet sein. Damit lässt sich die Position oder Arbeitsstellung der Kolbenstange des Hydraulikzylinders bestimmen. Ein entsprechendes Mess- oder Positionssignal kann über eine Datenleitung an eine nicht dargestellte Datenverarbeitungseinheit übermittelt werden, die basierend auf dem Messsignal den Klappvorgang der Gestängeabschnitte steuert. Die Datenverarbeitungseinheit ist hierbei derart konfiguriert, dass die Signale der Sensoren verarbeitet werden können und auf deren Basis ein Stellsignal für die Hydraulikzylinder generiert werden kann. Somit kann mittels der Potentiometer zur Positionserfassung der Ausklappvorgang des Verteilergestänges erfasst werden.

Wenn sich das Verteilergestänge in der Arbeitsstellung befindet, oder anders gesagt komplett ausgeklappt ist, können mittels des Steuer- und/oder Regelsystems auftretende Schwingungen am Verteilergestänge über die Hydraulikzylinder 10 a, b gedämpft und das Verteilergestänge 12 möglichst in seiner Solllage gehalten werden. Die Solllage des Verteilergestänges 12 zeichnet sich dadurch aus, dass keine Relativbewegung zwischen dem, das Verteilergestänge tragenden Nutzfahrzeug, und dem Verteilergestänge selbst, insbesondere in Fahrtrichtung, auftritt. Insbesondere treten in der Solllage keine Relativbewegungen aufgrund von Schwingungen des Verteilergestänges in Fahrtrichtung auf. Dabei ist zu beachten, dass es sich bei der Solllage um eine idealisierte Lage handelt, die im Betrieb bei aktiver Dämpfung nicht ständig, bzw. nur kurzzeitig, zu erreichen ist.

Hierzu umfasst das Steuer- und/oder Regelsystem nicht dargestellte Sensoren, welche derart ausgebildet sind, dass eine durch Schwingungen des Verteilergestänges 12 auftretende Druckänderung an den Hydraulikzylindern 10 a, b ermittelbar ist. Im Speziellen kann mittels der vorzugsweise als Drucksensoren ausgebildeten Sensoren 15 a, b ein Druckunterschied am jeweiligen Hydraulikzylinder 10 a, b gemessen werden. Alternativ können die Sensoren 15 a, b als Kraftsensoren ausgebildet sein. Basierend auf den Messsignalen der Drucksensoren kann die Datenverarbeitungseinheit eine dem jeweiligen Hydraulikzylinder 10 a, b zugeordnete nicht dargestellte hydraulische Ventileinheit ansteuern, wodurch ein Druckausgleich und damit eine Dämpfung der auftretenden Schwingungen erzielt werden kann.

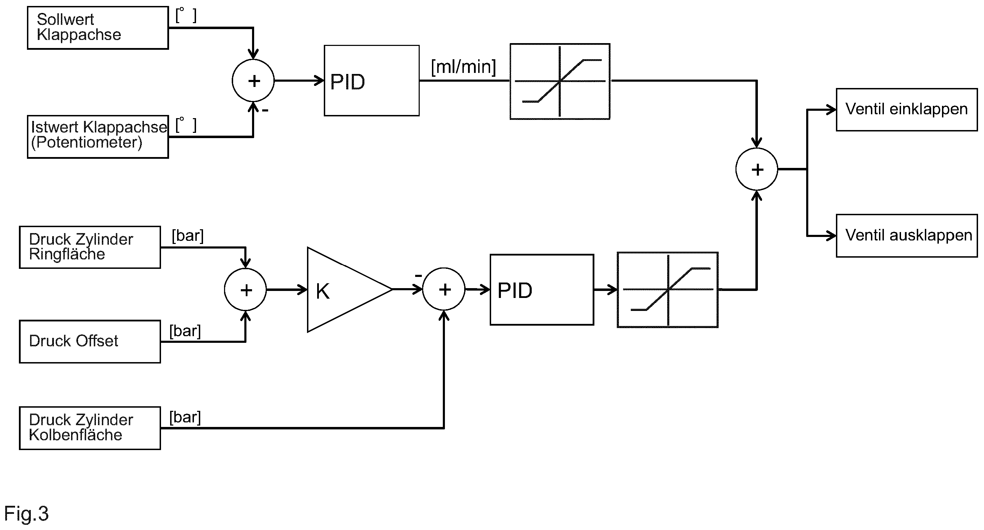

Fig. 3 zeigt ein Blockschaltbild einer möglichen Ausführung eines Steuer- und Auswerteprogramms einer Datenverarbeitungseinheit gemäß Fig. 2. Es ist zu erkennen, dass das Schaltbild zwei Hauptarme umfasst. Der obere Arm beschreibt die Regelung des Steuersystems für den Winkel zwischen einem Ausleger und dem Mittelteil. Es ist erkennbar, dass der Sollwert des Winkels zwischen einem der Ausleger und dem Mittelteil mit einem Istwert dieses Winkels verglichen wird. Im vorliegenden Beispiel wird die Differenz zwischen den Werten gebildet. Das Ergebnis des Vergleichs wird als Istwert an einen ersten PID-Regler übergeben, dessen Sollwert 0 ist. Mit anderen Worten vergleicht der erste PID-Regler die gemessene Winkeldifferenz mit dem Wert 0. Der erste PID-Regler ist in bekannter Art und Weise derart konfiguriert, dass er den Sollwert laufend mit dem Istwert vergleicht, und aus dem Unterschied der beiden Größen, also der Regelabweichung, ein erstes Signal ermittelt, um die Regelabweichung zu minimieren. Es ist angedeutet, dass das erste Signal weiterhin modifiziert werden kann. Dies kann beispielsweise in Abhängigkeit einer gemessenen Position des Verteilergestänges 12 geschehen.

Der untere Arm des Blockschaltbildes beschreibt die Steuerung der Schwingungsdämpfung, die auf den gemessenen Drücken an der hydraulischen Einrichtung, genauer gesagt an der Ringfläche und der Kolbenfläche des hydraulischen Zylinders, basiert. Es ist gezeigt, dass der gemessene Druck auf der Ringfläche mit dem gemessenen Druck auf der Kolbenfläche verglichen wird. Hierbei wird der Druck auf der Ringfläche zuvor mittels eines Druckoffsets korrigiert. Der Druckoffset berücksichtigt hierbei extern wirkende Kräfte, die in der Solllage des Verteilergestänges, also beispielsweise in der Arbeitsstellung, auf den Hydraulikzylinder wirken. Solche Kräfte können beispielsweise aufgrund von Hangfahrten oder einem nicht symmetrisch ausgeklappten Verteilergestänge auftreten. Der Druckoffset kann als fester Wert in der Datenverarbeitungsvorrichtung hinterlegt sein. Er kann auch vom Benutzer veränderbar sein. Es ist auch möglich, dass der Druckoffset während des Betriebs des landwirtschaftlichen Geräts dynamisch aufgrund der gemessenen Druckwerte angepasst wird. Nach der Korrektur des gemessenen Drucks mit dem Druckoffset wird der korrigierte Wert weiterhin mit dem Verhältnis der Kolbenfläche zur Ringfläche korrigiert, genauer gesagt multipliziert. Da die Kraft, die auf eine Fläche wirkt, das Produkt aus der Fläche und dem darauf wirkenden Druck ist, kann dann der korrigierte Druck auf der Ringfläche direkt mit dem Druck auf der Kolbenfläche verglichen werden.

Beispielsweise ist die Kolbenfläche um einen Faktor K, beispielhaft um den Faktor 2, größer ausgebildet als die Ringfläche. Wirkt nun auf die Ringfläche ein Druck von 90 bar, so würde an der Kolbenfläche im Kräftegleichgewicht ein kleinerer Druck als an der Ringfläche, in diesem Beispiel 45 bar, herrschen.

Es wird anschließend die Differenz des korrigierten Drucks auf der Ringfläche und des Drucks auf der Kolbenfläche gebildet und dieser Wert wird wiederum an einen zweiten PID-Regler als Istwert übergeben, dessen Sollwert der Wert 0 ist. Mit anderen Worten vergleicht der zweite PID-Regler die gemessene Druckdifferenz, wobei der Druck auf die Ringfläche wie oben beschrieben korrigiert wurde, mit dem Wert 0. Der zweite PID-Regler ist in bekannter Art und Weise derart konfiguriert, dass er den Sollwert laufend mit dem Istwert vergleicht, und aus dem Unterschied der beiden Größen ein zweites Signal ermittelt, um die Regelabweichung zu minimieren.

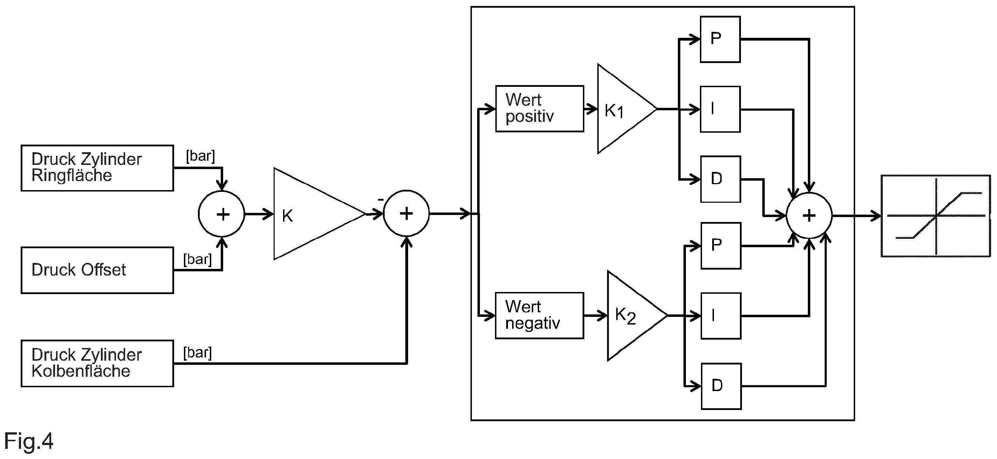

In Fig. 3 ist weiterhin zu sehen, dass das zweite Signal weiterhin modifiziert, insbesondere beschränkt, werden kann. Dies kann insbesondere in Abhängigkeit von dem gemessenen Winkel geschehen, wie weiter unten im Zusammenhang mit Fig. 4a und 4b beschrieben ist. Zusätzlich kann aber auch eine Beschränkung vorgesehen sein, die unabhängig von dem gemessenen Winkel ist. Beispielsweise ist es möglich, den Wert des zweiten Signals auf einen Maximalwert zu beschränken, der in keinem Fall überschritten wird.

Unter Verwendung des ersten Signals aus dem oberen Arm und des zweiten Signals aus dem unteren Arm wird ein Stellsignal generiert und an die hydraulische Einrichtung übergeben. Als Reaktion auf das Stellsignal wird das jeweilige hydraulische Ventil angesteuert, um den jeweiligen Ausleger ein- oder auszuklappen.

Fig. 4 zeigt beispielhaft den unteren Arm des Blockschaltbildes aus Fig. 3, wobei die Logik des zweiten PID-Regler in größerem Detail dargestellt ist. Es ist zu sehen, dass in dem PID-Regler eine Unterscheidung stattfindet, ob der Istwert positiv oder negativ ist. In Abhängigkeit von dieser Unterscheidung werden in dem dargestellten Beispiel P, I, und D Komponenten des Reglers modifiziert mit einem Faktor K1 für positive Werte und K2 für negative Werte verwendet. Über die Werte K1 und K2 können jeweils alle der P, I, und D Komponenten gleichzeitig beeinflusst werden. Generell ist zu sagen, dass in dem vorliegenden Beispiel die P-Komponente ausreichend für die Regelung der Steuerung ist. Der erste PID-Regler in dem oberen Arm des in Fig. 3 gezeigten Blockschaltbildes kann ähnlich ausgebildet sein.

Die in Fig. 3 gezeigte Modifikation kann auf verschiedene Arten durchgeführt werden. Beispielsweise kann der maximale Ausgangswert des Reglers in bekannter Art und Weise begrenzt werden. Alternativ oder zusätzlich ist es möglich, die Werte K1 und K2 anzupassen, also die Regelfaktoren des Reglers zu beeinflussen.

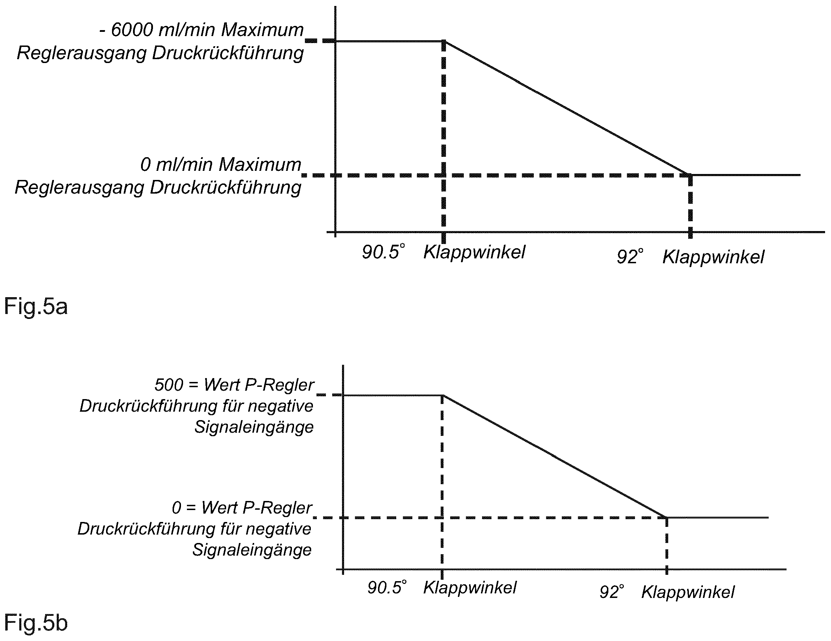

Diese Möglichkeiten sind in den Fig. 5a und 5b illustriert. Fig. 5a zeigt beispielhaft den möglichen Verlauf eines maximalen Ausgangssignals des zweiten PID-Reglers aus Fig. 3 in Abhängigkeit von dem gemessenen Klappwinkel. Dabei ist zu sehen, dass unterhalb eines ersten Klappwinkels, hier 90,5°, der Reglerausgang konstant einen Maximalwert von -6000 ml/min besitzt. In dem Bereich zwischen 90,5° und 92° wird dieser Wert stetig verringert, bis er den Wert 0 erreicht. Das heißt also, dass bei einem Klappwinkel, der größer als 92° ist, das Ausgangssignal des zweiten PID-Reglers gleich 0 ist, und daher der untere Arm des in Fig. 3 gezeigten Blockschaltbildes keinen Einfluss mehr auf die Regelung nimmt. Dies hat zur Folge, dass keine Schwingungsdämpfung erfolgt, und das Stellsignal von dem oberen Arm des Schaltbildes, also durch die Winkelregelung, bestimmt wird.

Fig. 5b illustriert den analogen Fall, bei dem nicht der maximale Ausgabewert des PID-Reglers, sondern ein Regelparameter, insbesondere der Parameter für die P-Komponente, angepasst wird. Dabei wird ist der Wert unterhalb eines Klappwinkels von 90,5° konstant gleich 500. Im Bereich zwischen 90,5° und 92° nimmt der Wert stetig ab. Oberhalb eines Klappwinkels von 92° ist der Wert gleich 0. Dies hat wiederum zur Folge, dass der untere Arm des in Fig. 3 gezeigten Blockschaltbildes keinen Einfluss mehr auf die Regelung nimmt. Es ist hierbei möglich, dass der Parameter P auch mittels des Wertes K1 oder K2 angepasst wird.

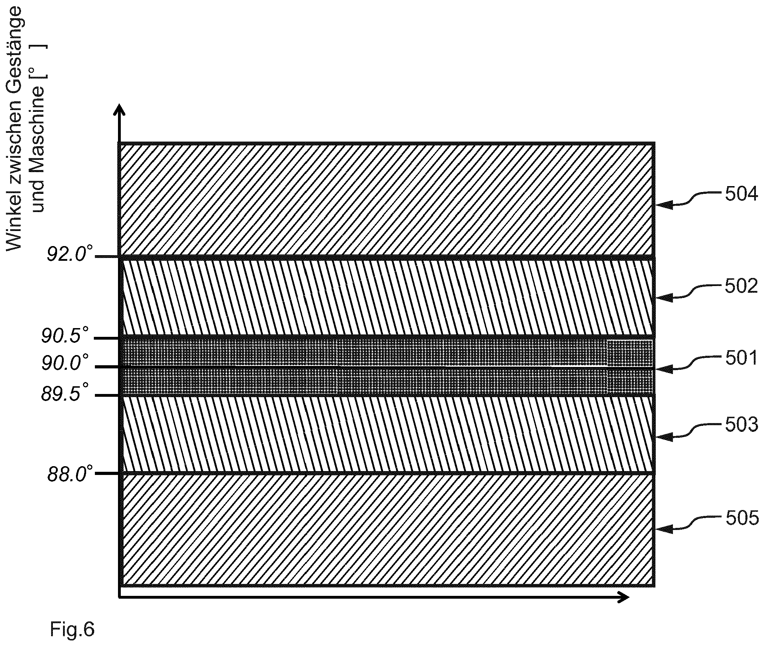

Die Fig. 5a und 5b illustrieren einen Fall, bei dem der gemessene Winkel größer ist ein bestimmter Wert. Es versteht sich aber, dass Analoges für den Fall gilt, in dem der gemessene Winkel kleiner als ein bestimmter Wert ist. Dies wird später mit Bezug auf Fig. 6 veranschaulicht. Hierbei ist zu bemerken, dass die gezeigten Werte des ersten Klappwinkels von 90,5° und des zweiten Klappwinkels von 92° lediglich beispielhaft sind.

Während in den Fig. 5a und 5b ein linearer Verlauf des maximalen Ausgangssignals beziehungsweise des Regelparameters zwischen dem ersten Klappwinkel und dem zweiten Klappwinkel gezeigt ist, sind auch andere Verläufe möglich. So kann der Verlauf auch durch eine nicht-lineare Funktion gekennzeichnet sein. Er kann auch einen stufenförmigen Verlauf aufweisen.

Fig. 6 zeigt schematisch verschiedene Winkelbereiche, und die in den Winkelbereichen in der beispielhaften Steuerung verwendeten Regelwerte. Beispielhaft sind hier fünf verschiedene Klappwinkelbereiche illustriert. Der erste Bereich 501 ist ein Winkelintervall um den Sollwinkel des Verteilergestänges, in diesem Fall 90°, herum. Dieses Intervall umfasst die Winkelwerte von 89,5° bis 90,5°, einschließlich. Im ersten Bereich 501 findet keine Begrenzung des maximalen Ausgangssignals oder eines Regelparameters statt. Mit anderen Worten kann in diesem Bereich die Dämpfungsregelung frei auf den hydraulischen Zylinder wirken. Der zweite Bereich 502 umfasst das Winkelintervall das Winkelintervall von 90,5° (ausschließlich) bis 92° (einschließlich). In diesem Bereich wird eine Ansteuerung des hydraulischen Ventils durch die Dämpfungsregelung, die zum Ausklappen des Gestänges führt, durch eine Begrenzung des minimalen Regelwertes und/oder des Regelparameters K1 begrenzt. Sollte das Ergebnis des Reglers positiv sein, d.h. auf ein Einklappen des Gestänges hinwirken, so findet keine Begrenzung statt. Dies hat den Grund in der Tatsache, dass in diesem Fall die Dämpfungsregelung und die Winkelregelung in dieselbe Richtung regeln, da das Gestänge weiter ausgeklappt ist als erwünscht.

Der dritte Bereich 503 umfasst das Winkelintervall das Winkelintervall von 89,5° (ausschließlich) bis 88° (einschließlich). In diesem Bereich wird eine Ansteuerung des hydraulischen Ventils durch die Dämpfungsregelung, die zum Einklappen des Gestänges führt, durch eine Begrenzung des maximalen Regelwertes und/oder des Regelparameters K2 begrenzt. Sollte das Ergebnis des Reglers negativ sein, d.h. auf ein Ausklappen des Gestänges hinwirken, so findet keine Begrenzung statt. Dies hat den Grund in der Tatsache, dass in diesem Fall die Dämpfungsregelung und die Winkelregelung in dieselbe Richtung regeln, da das Gestänge weniger weit ausgeklappt ist als erwünscht.

Der vierte Bereich 504 umfasst alle Winkel, die größer sind als 92°. In diesem Bereich werden der minimale Regelwert und/oder der Regelparameters K1 auf 0 begrenzt. Das heißt, es wird keine Schwingungsdämpfung durchgeführt, die zu einem Ausklappen des Gestänges führen würde. Sollte das Ergebnis des Reglers positiv sein, d.h. auf ein Einklappen des Gestänges hinwirken, so findet aus den oben genannten Gründen keine Begrenzung statt.

Der fünfte Bereich 505 umfasst alle Winkel, die kleiner sind als 88°. In diesem Bereich werden der maximale Regelwert und/oder der Regelparameters K2 auf 0 begrenzt. Das heißt, es wird keine Schwingungsdämpfung durchgeführt, die zu einem Einklappen des Gestänges führen würde. Sollte das Ergebnis des Reglers negativ sein, d.h. auf ein Ausklappen des Gestänges hinwirken, so findet aus den oben genannten Gründen keine Begrenzung statt.

Die Fig. 6 bis 8 zeigen schematische Darstellungen eines Hydraulikschaltplans für ein Steuer- und/oder Regelsystem. Beispielhaft werden verschiedene Hydraulikschaltpläne gezeigt. Es wird darauf hingewiesen, dass weitere Komponenten vorhanden sein können, aber für die einfache schematische Anordnung in den Figuren nicht dargestellt sind.

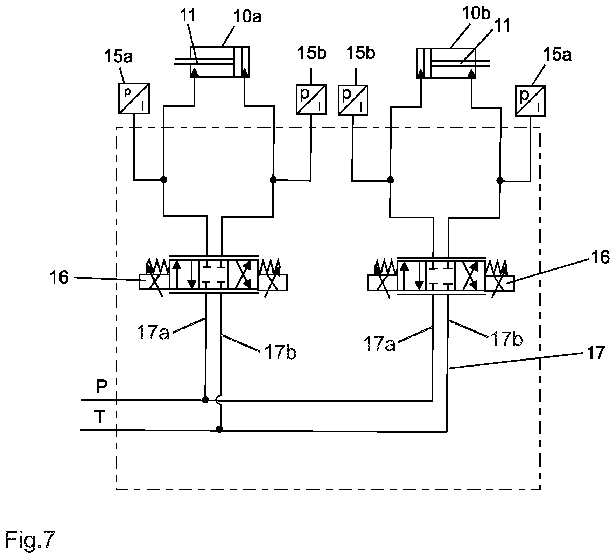

Fig. 7 stellt einen Hydraulikschaltplan für eine hydraulische Einrichtung nach einem erfindungsgemäßen Ausführungsbeispiel für die Druckbeaufschlagung des rechten und linken Hydraulikzylinder 10 a, b gemäß Fig. 2 zur Überführung des Verteilergestänges von einer Transportstellung in eine Arbeitsstellung und zur Einstellung der Dämpfung von am Verteilergestänge auftretenden Schwingungen in Fahrtrichtung dar. Der rechte und linke Hydraulikzylinder 10 a, b sind beispielhaft als doppeltwirkende Hydraulikzylinder ausgebildet. Die Hydraulikzylinder 10 a, b sind mit dem Verteilergestänge gemäß Fig. 2 wie oben beschrieben verbunden. Über die Hydraulikleitung 17 sind die Hydraulikzylinder 10 a, b mit einem nicht dargestellten Hydraulikreservoir verbunden. Das Hydraulikreservoir enthält eine Hydraulikflüssigkeit, welche über die Hydraulikleitung 17 dem jeweiligen Hydraulikzylinder 10 a, b zugeführt werden kann. Dabei ist die Hydraulikleitung 17 durch eine Druck-Leitung, welche in den Figuren mit dem Bezugszeichen P gekennzeichnet ist, sowie eine Hydraulikreservoir-Leitung, welche mit dem Bezugszeichen T gekennzeichnet ist, gebildet.

Dem rechten und linken Hydraulikzylinder 10 a, b sind jeweils zwei Drucksensoren 15 a, b zugeordnet. Dabei sind die beiden Drucksensoren 15 a, b dem Hydraulikzylinder derart zugeordnet, dass sowohl ein Druck an einer Kolbenfläche, als auch an einer Ringfläche des Hydraulikzylinders 10 a, b ermittelt werden kann. Der Hydraulikzylinder 10 a, b weist an den zwei Seiten des Kolbens 11 zwei verschieden große Wirkflächen auf. Die der Kolbenstange zugewandte Wirkfläche des Hydraulikzylinders ist hierbei kleiner als die der Kolbenstange abgewandten Wirkfläche. Demnach misst der Drucksensor 15a an der Ringfläche einen unterschiedlichen, insbesondere größeren, Druck als der Drucksensor 15b an der Kolbenfläche.

Die Drucksensoren 15 a, b sind zur Messung des Drucks an der Ring- und Kolbenfläche des Hydraulikzylinders 10 a, b an eine Zuführleitung 17a und eine Abführleitung 17b des jeweiligen Hydraulikzylinders 10a, b angeschlossen. Die Zuführleitung 17a der Hydraulikleitung 17 beschreibt im Rahmen der Anmeldung jenen Abschnitt der Hydraulikleitung 17, welcher das nicht dargestellte Hydraulikreservoir mit der Ringfläche des Hydraulikzylinders 10 a, b verbindet. Im Gegensatz dazu beschreibt im Rahmen der Anmeldung die Abführleitung 17b der Hydraulikleitung 17 jenen Abschnitt der Hydraulikleitung 17, welcher das Hydraulikreservoir mit der Kolbenfläche des Hydraulikzylinders 10 a, b verbindet.

Die Drucksensoren 15 a, b sind hierbei beispielhaft als Druckmessumformer ausgebildet. Der Druckmessumformer stellt generell einen elektrischen Messumformer zur Messung des vorhandenen Drucks im Hydraulikzylinder 10 a, b dar. Somit ist mittels des Drucksensors eine durch Schwingungen des Verteilergestänges auftretende Druckänderung ermittelbar. Beispielhaft kann mittels der Druckmessumformer 15 a, b ein Druckunterschied am Hydraulikzylinder 10 a, b und damit an der hydraulischen Einrichtung gemessen werden.

Weiterhin ist jedem Hydraulikzylinder 10 a, b eine hydraulische Ventileinheit zur Regelung des Hydraulikdrucks zugeordnet. Dabei ist die hydraulische Ventileinheit in der Hydraulikleitung 17 angeordnet und beispielhaft als Proportionalventil 16, oder anders gesagt als Mehrwegeventil ausgebildet. Die dem jeweiligen Hydraulikzylinder 10 a, b zugeordneten Drucksensoren 15 a, b sind an der Zuführleitung 17a und Abführleitung 17b zwischen dem Hydraulikzylinder 10 a, b und dem zugehörigen Proportionalventil 16 angeordnet. Das Proportionalventil 16 ist hierbei im Speziellen als 4/3-Wegeventil ausgebildet. Das Proportionalventil 16 kann von einer nicht dargestellten Datenverarbeitungseinheit angesteuert und eingestellt werden. Hierzu ist das Proportionalventil 16 mit der Datenverarbeitungseinheit, beispielsweise über Kabelleitungen oder kabellos verbunden. Die Datenverarbeitungseinheit ist weiterhin mit den Drucksensoren 15 a, b verbunden. Basierend auf den von den Drucksensoren 15 a, b ermittelten Signalen kann die Datenverarbeitungseinheit das Proportionalventil 16 ansteuern. Im Speziellen kann das Proportionalventil 16, welches dem jeweiligen Hydraulikzylinder 10 a, b zugeordnet ist, zum Druckausgleich basierend auf den von den Drucksensoren 15 a, b ermittelten Werten angesteuert werden. In der Ruhestellung des Proportionalventils 16, ist das Ventil vorzugsweise geschlossen, oder anders gesagt in einer mittigen Stellung. Über die Datenverarbeitungseinheit kann das Ventil nach links oder rechts ausgelenkt werden. Durch die Auslenkung des Ventils, kann der Druck an der Ringfläche, bzw. der Kolbenfläche des Hydraulikzylinders mittels des Proportionalventils erhöht bzw. gesenkt werden, oder anders gesagt, der Kolben des Hydraulikzylinders 10 a, b ein- oder ausgefahren werden.

Dabei bilden die Datenverarbeitungseinheit, die Drucksensoren 15 a, b und die hydraulische Ventileinheit 16 der hydraulischen Einrichtung eine Einheit. Somit kann basierend auf den von den Drucksensoren 15 a, b ermittelten Signalen mittels der Datenverarbeitungseinheit und den Proportionalventilen zum Druckausgleich in den Hydraulikzylindern 10 a, b eine Dämpfung von am Verteilergestänge auftretenden Schwingungen erfolgen.

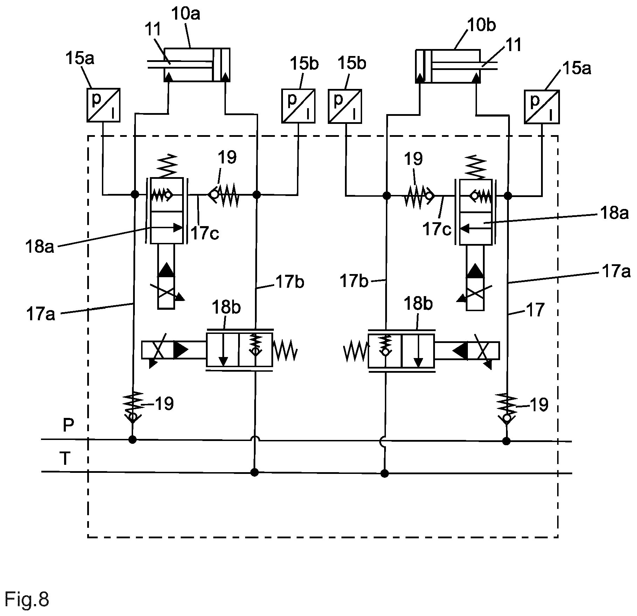

Fig. 8 zeigt eine weitere schematische Darstellung eines Hydraulikschaltplans für ein erfindungsgemäßes Steuer- und/oder Regelsystem gemäß einem weiteren Ausführungsbeispiel. Wie mit Bezug auf Fig. 7 beschrieben sind der rechte und linke Hydraulikzylinder 10 a, b zum Klappen des rechten und linksseitigen Auslegers 3 des Verteilergestänges 12 gemäß Fig. 1 und zur Dämpfung von am Verteilergestänge 12 auftretenden Schwingungen beispielhaft als doppeltwirkende Hydraulikzylinder 10 a, b ausgebildet und mit einer Hydraulikleitung 17 verbunden. Zur Messung des Hydraulikdrucks an der Ring- und der Kolbenfläche des jeweiligen Hydraulikzylinders 10 a, b sind jedem Hydraulikzylinder 10 a, b zwei Drucksensoren 15 a, b wie mit Bezug auf Fig. 7 beschrieben zugeordnet.

In der jeweiligen Zuführleitung 17a der Hydraulikleitung 17 in den jeweiligen Hydraulikzylinder 10 a, b kann zwischen dem nicht dargestellten Hydraulikreservoir und dem jeweiligen Hydraulikzylinder 10 a, b ein Sperrventil 19 angeordnet sein. Das Sperrventil 19 kann als Rückschlagventil ausgebildet und mit einer Feder belastet sein. Mittels des Sperrventils 19 kann der Durchfluss in einer Richtung gesperrt und in entgegengesetzter Richtung freigegeben werden. Demnach kann an der Ringfläche des jeweiligen Hydraulikzylinders 10 a, b kontinuierlich Hydraulikdruck anliegen.

In der jeweiligen Abführleitung 17b des jeweiligen Hydraulikzylinders 10 a, b ist ein Mehrwegeventil 18b angeordnet. Die Druckmessung des Hydraulikdrucks mit dem Drucksensor 15b erfolgt dabei zwischen dem Hydraulikzylinder 10 a, b und dem Mehrwegeventil 18b. Das Mehrwegeventil 18b kann dabei elektronisch über die Datenverarbeitungseinheit zum Druckausgleich basierend auf den Messsignalen des Drucksensors 15 a, b gesteuert werden.

Die Zuführleitung 17a und die Abführleitung 17b sind mittels einer zusätzlichen Zwischenleitung 17c verbunden. In der Zwischenleitung 17c ist ein weiteres Mehrwegeventil 18a angeordnet. Das Mehrwegeventil 18a kann dabei elektronisch mittels der Datenverarbeitungseinheit gesteuert werden. Weiterhin kann ein Sperrventil 19 auf der Abführleitung 17b zugewandten Seite des Mehrwegeventils 18a angeordnet sein.

Die beiden Mehrwegeventile 18 a dienen der Verbindung zwischen Ring- und Kolbenfläche des jeweiligen Hydraulikzylinders 10 a, b. Zum Ausfahren des Hydraulikzylinders 10 a, b werden die Ring- und Kolbenfläche miteinander verbunden, bzw. fährt der Hydraulikzylinder über die im Verhältnis größere Fläche der Kolbenfläche aus. Anders gesagt kann bei einer Betätigung des jeweiligen Mehrwegeventils 18 a durch die Datenverarbeitungseinheit, der jeweilige Hydraulikzylinder 10 a, b ausfahren.

Das Einfahren des jeweiligen Hydraulikzylinders 10 a, b kann mittels des dem jeweiligen Hydraulikzylinder 10 a, b zugeordneten Mehrwegeventils 18 b erreicht werden. Bei einer Betätigung des Mehrwegeventils 18b durch die Datenverarbeitungseinheit, kann auf der Kolbenseite des Hydraulikzylinders 10 a, b Hydraulikflüssigkeit abgelassen werden. Aufgrund der kontinuierlichen Versorgung der Ringfläche des Hydraulikzylinders 10 a, b mit Hydraulikdruck, kann der Hydraulikzylinder 10 a, b demnach einfahren.

Damit beim Ein- und Ausfahren des Hydraulikzylinders 10 a, b identische Kräfte erzeugt werden können, sollte das Verhältnis zwischen Ring- und Kolbenfläche idealerweise 1:2 betragen. Somit kann basierend auf den von den Drucksensoren 15 a, b gemessenen Werten, welche von der Datenverarbeitungseinheit ausgewertet und verarbeitet werden, über das elektronisch gesteuerte Ein- und Ausklappen der beiden Mehrwegeventile 18 a, b, das Ein- und Ausfahren des Hydraulikzylinders 10 a, b effizient gesteuert werden.

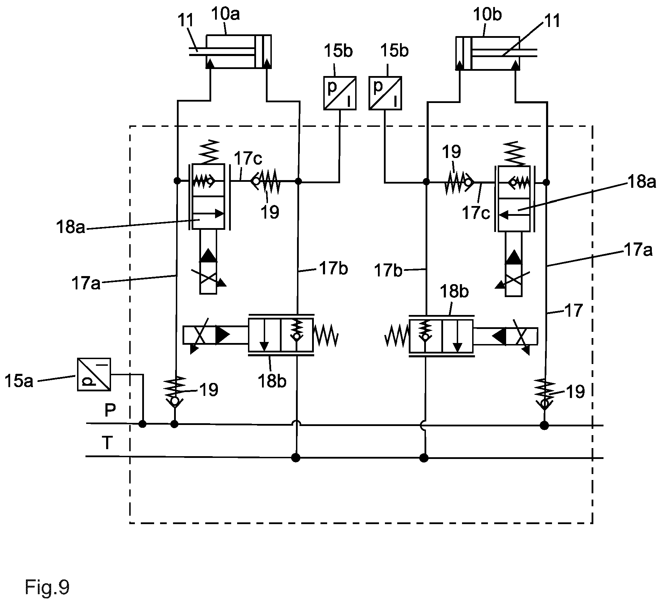

Fig. 9 zeigt eine weitere schematische Darstellung eines Hydraulikschaltplans für ein erfindungsgemäßes Steuer- und/oder Regelsystem gemäß einem dritten Ausführungsbeispiel. Der Grundaufbau und die Funktionsweise der einzelnen Komponenten des Hydraulikschaltplans ist wie mit Bezug auf Fig. 8 beschrieben. Im Unterschied zu Fig. 8 ist in der Hydraulikleitung 17 nur ein einziger Drucksensor 15a zur Messung des Drucks an der Ringfläche beider Hydraulikzylinder 10 a, b angeordnet. Demnach ist der einzige Drucksensor 15a in der Hydraulikleitung 17 zwischen dem nicht dargestellten Hydraulikreservoir und der jeweiligen Zuführleitung 17a des jeweiligen Hydraulikzylinders 10 a, b angeordnet. Mit anderen Worten ist der einzige Drucksensor 15a an die Druck-Leitung der Hydraulikleitung 17, welche in den Figuren mit dem Bezugszeichen P gekennzeichnet ist und die Zuführleitung 17 a umfasst, angeschlossen. Sollte im Betrieb der Fall eintreten, dass sich der Druck auf der Ringseite des Hydraulikzylinders 10 a, b erhöht, wird die Hydraulikflüssigkeit innerhalb der Zuführleitung 17a gegen das Sperrventil 19 gedrückt. Anders gesagt, stützt sich die Hydraulikflüssigkeitssäule auf dem Sperrventil 19 ab und der tatsächliche Druck auf der Ringfläche des Hydraulikzylinders 10 a, b weist einen höheren Wert auf, als der vom Drucksensor 15 a gemessene Druck. Folglich kann das Mehrwegeventil 18 a oder das Mehrwegeventil 18 b zum Druckausgleich geöffnet werden. Hierbei findet ein Angleichen der Drücke in der Druckleitung, und der Ringfläche des Hydraulikzylinders 10 a, b statt, da in beiden Fällen Hydraulikflüssigkeit aus der Druckleitung nachfließen kann.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Steuer- und/oder Regelsystem für ein landwirtschaftliches Gerät mit einem Verteilergestänge (12) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei jedem Ausleger (3) wenigstens eine hydraulische Einrichtung zugeordnet ist, wobei die jeweilige hydraulische Einrichtung zur Dämpfung von am Verteilergestänge (12) in Fahrtrichtung auftretenden Schwingungen ansteuerbar ist, und wobei die jeweilige hydraulische Einrichtung einen Hydraulikzylinder (10a,b), insbesondere einen doppeltwirkenden Hydraulikzylinder, umfasst, wobei das Steuer- und/oder Regelsystem umfasst:
eine erste Sensoreinrichtung, die dazu konfiguriert ist, eine durch Schwingungen des Verteilergestänges (12) auftretende Druckänderung an der jeweiligen hydraulischen Einrichtung zu erfassen;
eine zweite Sensoreinrichtung, die dazu konfiguriert ist, eine Position des jeweiligen Auslegers (3) zu dem Mittelteil (2) zu ermitteln; und
eine Datenverarbeitungseinheit, die dazu konfiguriert ist, Signale der ersten Sensoreinrichtung und der zweiten Sensoreinrichtung zu verarbeiten und auf deren Basis ein Stellsignal für die jeweilige hydraulische Einrichtung zu generieren,
**dadurch gekennzeichnet, dass** die Datenverarbeitungseinrichtung dazu eingerichtet ist, die Signale der ersten Sensoreinrichtung derart unter Berücksichtigung der ermittelten Position zu verarbeiten, dass bei einem Fahrzustand, bei dem externe Kräfte auf das Gerät einwirken, ein Konflikt zwischen der Dämpfungssteuerung aufgrund der Druckmessungen und der Steuerung aufgrund der ermittelten Position verhindert wird.

2. Steuer- und/oder Regelsystem gemäß Anspruch 1, wobei die Datenverarbeitungseinheit dazu konfiguriert ist, die Signale der ersten Sensoreinrichtung mittels eines Reglers, insbesondere eines PID-Reglers, zu verarbeiten, und das Stellsignal basierend auf der Ausgabe des Reglers zu generieren.

3. Steuer- und/oder Regelsystem gemäß Anspruch 1 oder 2, wobei die Datenverarbeitungseinheit dazu konfiguriert ist, den Einfluss der Signale der ersten Sensoreinrichtung auf das Generieren des Stellsignals, insbesondere unter Berücksichtigung der Ausgabe des Reglers, zu verringern, wenn eine Abweichung der ermittelten Position von einer Soll-Position größer oder gleich einem ersten vorherbestimmten Wert ist.

4. Steuer- und/oder Regelsystem gemäß einem der vorangegangenen Ansprüche, wobei die Datenverarbeitungseinheit dazu konfiguriert ist, die Signale der ersten Sensoreinrichtung bei dem Generieren des Stellsignals, insbesondere unter Berücksichtigung der Ausgabe des Reglers, nicht zu berücksichtigen, wenn eine Abweichung der ermittelten Position von einer Soll-Position größer oder gleich einem zweiten vorherbestimmten Wert ist.

5. Steuer- und/oder Regelsystem gemäß einem der vorangegangenen Ansprüche, wobei die erste Sensoreinrichtung dazu konfiguriert ist, einen Druck zu erfassen, der einem Druck auf der Seite einer Ringfläche eines jeweiligen Hydraulikzylinders (10 a,b) zugeordnet ist.

6. Steuer- und/oder Regelsystem gemäß einem der vorangegangenen Ansprüche, wobei die erste Sensoreinrichtung dazu konfiguriert ist, einen Druck zu erfassen, der einem gemeinsamen Druck auf der Seite der Ringflächen aller Hydraulikzylinder (10 a,b) zugeordnet ist.

7. Steuer- und/oder Regelsystem gemäß einem der vorangegangenen Ansprüche, wobei die jeweilige hydraulische Einrichtung weiterhin umfasst:
eine Hydraulikleitung (17), welche zur Zufuhr von Hydraulikflüssigkeit an den Hydraulikzylinder (10 a,b) angeschlossen ist; und
wenigstens eine hydraulische Ventileinheit (16) zur Regelung des Hydraulikdrucks, wobei die Ventileinheit (16) über ein Stellsignal der Datenverarbeitungseinheit steuerbar ist.

8. Steuer- und/oder Regelsystem gemäß Anspruch 7, wobei die wenigstens eine hydraulische Ventileinheit (16) durch ein Proportionalventil gebildet wird.

9. Steuer- und/oder Regelsystem gemäß einem der vorangegangenen Ansprüche, wobei die hydraulische Einrichtung das Verteilergestänge (12) von einer Transport- in eine Arbeitsstellung und umgekehrt überführen kann.

10. Landwirtschaftliches Gerät zum Ausbringen von Material, wie Düngemittel, Pflanzenschutzmittel oder Saatgut, umfassend ein Steuer- und/oder Regelsystem gemäß einem der vorangegangenen Ansprüche.

11. Verfahren zur Steuerung und/oder Regelung eines landwirtschaftlichen Geräts mit einem Verteilergestänge (12) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei jedem Ausleger (3) wenigstens eine hydraulische Einrichtung zugeordnet ist, wodurch das Verteilergestänge (12) von einer Transportstellung in eine Arbeitsstellung überführbar ist, wobei die jeweilige hydraulische Einrichtung zur Dämpfung von am Verteilergestänge in Fahrtrichtung auftretenden Schwingungen ansteuerbar ist, und wobei die jeweilige hydraulische Einrichtung einen Hydraulikzylinder (10 a,b), insbesondere einen doppeltwirkenden Hydraulikzylinder umfasst, wobei das Verfahren die folgenden Schritte umfasst:
Erfassen einer durch Schwingungen des Verteilergestänges (12) auftretenden Druckänderung an der jeweiligen hydraulischen Einrichtung durch eine erste Sensoreinrichtung;
Ermitteln einer Position eines der Ausleger (3) zu dem Mittelteil (2) durch eine zweite Sensoreinrichtung; und
Generieren, auf Basis der erfassten Druckänderung und der ermittelten Position, eines Stellsignals für die jeweilige hydraulische Einrichtung,
wobei die Signale der ersten Sensoreinrichtung derart unter Berücksichtigung der ermittelten Position verarbeitet werden, dass bei einem Fahrzustand, bei dem externe Kräfte auf das Gerät einwirken, ein Konflikt zwischen der Dämpfungssteuerung aufgrund der Druckmessungen und der Steuerung aufgrund der ermittelten Position verhindert wird.

12. Verfahren gemäß Anspruch 11, weiterhin umfassend die Schritte:
Verarbeiten der Signale der ersten Sensoreinrichtung, insbesondere eines PID-Reglers; und
Generieren des Stellsignals basierend auf der Ausgabe des Reglers.

13. Verfahren gemäß Anspruch 11 oder 12, wobei der Einfluss der Signale der ersten Sensoreinrichtung auf das Generieren des Stellsignals, insbesondere unter Berücksichtigung der Ausgabe des Reglers, verringert wird, wenn eine Abweichung der ermittelten Position von einer Soll-Position größer oder gleich einem ersten vorherbestimmten Wert ist.

14. Verfahren gemäß einem der Ansprüche 11 bis 13, wobei die Signale der ersten Sensoreinrichtung bei dem Generieren des Stellsignals, insbesondere unter Berücksichtigung der Ausgabe des Reglers, nicht berücksichtig werden, wenn eine Abweichung der ermittelten Position von einer Soll-Position größer oder gleich einem zweiten vorherbestimmten Wert ist.

## Claims

1. Open-loop and/or closed-loop control system for an agricultural apparatus having a distributor boom (12) for spreading material, such as fertilizer, plant protectant, or seed, which extends transversely to the direction of travel and has a central part (2) and two lateral arms (3) which are connected to the central part (2) and have a plurality of boom portions (4) which are connected by joints and can be folded in toward one another in the transport position and unfolded in the working position, each arm (3) being associated with at least one hydraulic device, it being possible for each hydraulic device to be actuated to damp vibrations occurring on the distributor boom (12) in the direction of travel, and each hydraulic device comprising a hydraulic cylinder (10a,b), in particular a double-acting hydraulic cylinder, the open-loop and/or closed-loop control system comprising:
a first sensor device which is configured to detect a pressure change occurring at the relevant hydraulic device caused by vibrations of the distributor boom (12);
a second sensor device which is configured to determine a position of each arm (3) relative to the central part (2); and
a data processing unit which is configured to process signals from the sensor device and the second sensor device and to generate a control signal for the relevant hydraulic device on the basis of these signals,
**characterized in that** the data processing device is designed to process the signals from the first sensor device, taking into account the determined position, in such a way that, in a driving state in which external forces act on the apparatus, conflict is prevented between the damping control based on the pressure measurements and the control based on the determined position.

2. Open-loop and/or closed-loop control system according to claim 1, wherein the data processing unit is configured to process the signals from the first sensor device by means of a controller, in particular a PID controller, and to generate the control signal on the basis of the output of the controller.

3. Open-loop and/or closed-loop control system according to claim 1 or 2, wherein the data processing unit is configured to reduce the influence of the signals from the first sensor device upon the generation of the control signal, in particular taking into account the output of the controller, if a deviation of the determined position from a target position is greater than or equal to a first predetermined value.

4. Open-loop and/or closed-loop control system according to any of the preceding claims, wherein the data processing unit is configured not to take into account the signals from the first sensor device when generating the control signal, in particular taking into account the output of the controller, if a deviation of the determined position from a target position is greater than or equal to a second predetermined value.

5. Open-loop and/or closed-loop control system according to any of the preceding claims, wherein the first sensor device is configured to detect a pressure associated with a pressure on the side of an annular surface of each hydraulic cylinder (10 a,b).

6. Open-loop and/or closed-loop control system according to any of the preceding claims, wherein the first sensor device is configured to detect a pressure associated with a common pressure on the side of the annular surfaces of all hydraulic cylinders (10 a,b).

7. Open-loop and/or closed-loop control system according to any of the preceding claims, wherein each hydraulic device further comprises:
a hydraulic line (17) which is connected to the hydraulic cylinder (10 a,b) for supplying hydraulic fluid; and
at least one hydraulic valve unit (16) for controlling the hydraulic pressure, wherein the valve unit (16) is controllable via a control signal from the data processing unit.

8. Open-loop and/or closed-loop control system according to claim 7, wherein the at least one hydraulic valve unit (16) is formed by a proportional valve.

9. Open-loop and/or closed-loop control system according to any of the preceding claims, wherein the hydraulic device can transfer the distributor boom (12) from a transport position to a working position, and vice versa.

10. Agricultural apparatus for spreading material, such as fertilizer, plant protectant or seed, having an open-loop and/or closed-loop control system according to any of the preceding claims.

11. Method for open-loop and/or closed-loop control of an agricultural apparatus having a distributor boom (12) for spreading material, such as fertilizer, plant protectant, or seed, which extends transversely to the direction of travel and has a central part (2) and two lateral arms (3) which are connected to the central part (2) and have a plurality of boom portions (4) which are connected by joints and can be folded in toward one another in the transport position and unfolded in the working position, wherein each arm (3) is associated with at least one hydraulic device, as a result of which the distributor boom (12) can be transferred from a transport position to a working position, wherein each hydraulic device can be actuated to damp vibrations occurring on the distributor boom in the direction of travel, and wherein each hydraulic device comprises a hydraulic cylinder (10 a,b), in particular a double-acting hydraulic cylinder, wherein the method comprises the following steps:
detecting a pressure change occurring at the relevant hydraulic device caused by vibrations of the distributor boom (12) by means of a first sensor device;
determining a position of one of the arms (3) relative to the central part (2) by means of a second sensor device; and
generating, on the basis of the detected pressure change and the determined position, a control signal for the relevant hydraulic device,
wherein the signals from the first sensor device are processed, taking into account the determined position, in such a way that, in a driving state in which external forces act on the apparatus, conflict is prevented between the damping control based on the pressure measurements and the control based on the determined position.

12. Method according to claim 11, further comprising the steps of:
processing the signals from the first sensor device, in particular a PID controller; and
generating the control signal on the basis of the output of the controller.

13. Method according to claim 11 or 12, wherein the influence of the signals from the first sensor device upon the generation of the control signal, in particular taking into account the output of the controller, is reduced if a deviation of the determined position from a target position is greater than or equal to a first predetermined value.

14. Method according to any of claims 11 to 13, wherein the signals from the first sensor device are not taken into account when generating the control signal, in particular taking into account the output of the controller, if a deviation of the determined position from a target position is greater than or equal to a second predetermined value.

## Revendications

1. Système de commande et/ou de régulation pour un appareil agricole comportant une rampe de distribution (12) pour l'épandage de matière, telle que de l'engrais, des agents phytosanitaires ou des semences, et qui s'étend transversalement à la direction de conduite et présente une partie centrale (2) et deux bras (3) latéraux reliés à la partie centrale (2) et comportant plusieurs sections de rampe (4) reliées par des articulations, pouvant être repliées les unes par rapport aux autres en position de transport et pouvant être déployées en position de travail, dans lequel au moins un dispositif hydraulique est associé à chaque bras (3), dans lequel le dispositif hydraulique respectif peut être commandé pour amortir des oscillations apparaissant sur la rampe de distribution (12) en direction de conduite, et dans lequel le dispositif hydraulique respectif comprend un vérin hydraulique (10a,b), en particulier un vérin hydraulique à double effet, dans lequel le système de commande et/ou de régulation comprend :
un premier dispositif de détection configuré pour détecter une variation de pression au niveau du dispositif hydraulique respectif apparaissant suite à des oscillations de la rampe de distribution (12) ;
un second dispositif de détection configuré pour déterminer une position du bras (3) respectif par rapport à la partie centrale (2) ; et
une unité de traitement de données configurée pour traiter des signaux du premier dispositif de détection et du second dispositif de détection et pour générer, sur la base de ceux-ci, un signal de réglage pour le dispositif hydraulique respectif,
**caractérisé en ce que** le dispositif de traitement de données est configuré pour traiter les signaux du premier dispositif de détection en prenant en compte la position déterminée de telle sorte que, dans un état de conduite dans lequel des forces externes agissent sur l'appareil, un conflit entre la commande d'amortissement sur la base des mesures de pression et la commande sur la base de la position déterminée est évité.

2. Système de commande et/ou de régulation selon la revendication 1, dans lequel l'unité de traitement de données est configurée pour traiter les signaux du premier dispositif de détection au moyen d'un régulateur, en particulier d'un régulateur PID, et pour générer le signal de réglage sur la base de la sortie du régulateur.

3. Système de commande et/ou de régulation selon la revendication 1 ou 2, dans lequel l'unité de traitement de données est configurée pour réduire l'influence des signaux du premier dispositif de détection sur la génération du signal de réglage, en particulier en prenant en compte la sortie du régulateur, lorsqu'un écart entre la position déterminée et une position de consigne est supérieur ou égal à une première valeur prédéfinie.

4. Système de commande et/ou de régulation selon l'une des revendications précédentes, dans lequel l'unité de traitement de données est configurée pour ne pas prendre en compte les signaux du premier dispositif de détection lors de la génération du signal de réglage, en particulier en prenant en compte la sortie du régulateur, lorsqu'un écart entre la position déterminée et une position de consigne est supérieur ou égal à une seconde valeur prédéfinie.

5. Système de commande et/ou de régulation selon l'une des revendications précédentes, dans lequel le premier dispositif de détection est configuré pour détecter une pression associée à une pression du côté d'une surface annulaire d'un vérin hydraulique (10a,b) respectif.

6. Système de commande et/ou de régulation selon l'une des revendications précédentes, dans lequel le premier dispositif de détection est configuré pour détecter une pression associée à une pression commune du côté des surfaces annulaires de tous les vérins hydrauliques (10a,b).

7. Système de commande et/ou de régulation selon l'une des revendications précédentes, dans lequel le dispositif hydraulique respectif comprend en outre :
une conduite hydraulique (17) raccordée au vérin hydraulique (10a,b) pour l'alimentation en fluide hydraulique ; et
au moins une unité formant soupape (16) hydraulique pour la régulation de la pression hydraulique, dans lequel l'unité formant soupape (16) peut être commandée par l'intermédiaire d'un signal de réglage de l'unité de traitement de données.

8. Système de commande et/ou de régulation selon la revendication 7, dans lequel l'au moins une unité formant soupape (16) hydraulique est formée par une soupape proportionnelle.

9. Système de commande et/ou de régulation selon l'une des revendications précédentes, dans lequel le dispositif hydraulique peut faire passer la rampe de distribution (12) d'une position de transport à une position de travail et inversement.

10. Appareil agricole pour l'épandage de matière, telle que de l'engrais, des agents phytosanitaires ou des semences, comprenant un système de commande et/ou de réglage selon l'une des revendications précédentes.

11. Procédé pour la commande et/ou la régulation d'un appareil agricole comportant une rampe de distribution (12) pour l'épandage de matière, telle que de l'engrais, des agents phytosanitaires ou des semences, et qui s'étend transversalement à la direction de conduite et présente une partie centrale (2) et deux bras (3) latéraux reliés à la partie centrale (2) et comportant plusieurs sections de rampe (4) reliées par des articulations, pouvant être repliées les unes par rapport aux autres en position de transport et pouvant être déployées en position de travail, dans lequel au moins un dispositif hydraulique est associé à chaque bras (3), moyennant quoi la rampe de distribution (12) peut passer d'une position de transport à une position de travail, dans lequel le dispositif hydraulique respectif peut être commandé pour amortir des oscillations apparaissant sur la rampe de distribution dans la direction de conduite, et dans lequel le dispositif hydraulique respectif comprend un vérin hydraulique (10a,b), en particulier un vérin hydraulique à double effet, dans lequel le procédé comprend les étapes suivantes :
détection, par un premier dispositif de détection, d'une variation de pression sur le dispositif hydraulique respectif, apparaissant suite à des oscillations de la rampe de distribution (12) ;
détermination d'une position de l'un des bras (3) par rapport à la partie centrale (2) par un second dispositif de détection ; et
génération, sur la base de la variation de pression détectée et de la position déterminée, d'un signal de réglage pour le dispositif hydraulique respectif,
dans lequel les signaux du premier dispositif de détection sont traités en prenant en compte la position déterminée de telle sorte que, dans un état de conduite dans lequel des forces externes agissent sur l'appareil, un conflit entre la commande d'amortissement sur la base des mesures de pression et la commande sur la base de la position déterminée est évité.

12. Procédé selon la revendication 11, comprenant en outre les étapes consistant à :
traiter les signaux du premier dispositif de détection, en particulier d'un régulateur PID ; et
générer le signal de commande sur la base de la sortie du régulateur.

13. Procédé selon la revendication 11 ou 12, dans lequel l'influence des signaux du premier dispositif de détection sur la génération du signal de réglage est réduite, en particulier en prenant en compte la sortie du régulateur, lorsqu'un écart entre la position déterminée et une position de consigne est supérieur ou égal à une première valeur prédéfinie.

14. Procédé selon l'une des revendications 11 à 13, dans lequel les signaux du premier dispositif de détection ne sont pas pris en compte lors de la génération du signal de réglage, en particulier en prenant en compte la sortie du régulateur, lorsqu'un écart entre la position déterminée et une position de consigne est supérieur ou égal à une seconde valeur prédéfinie.
